# EUROPEAN PATENT APPLICATION

(11) **EP 0 907 285 A1**
(43) Date of publication of application: **07.04.1999**
(21) Application number: 97402335.0
(22) Date of filing: 03.10.1997
(51) Int. Cl.: H04N 7/00, H04N 5/00

(54) **Downloading data**

(71) Applicant: CANAL+ Société Anonyme, 75711 Paris Cedex 15 (FR)
(72) Inventor: Sarfati, Jean-Claude, 93800 Epinay sur Seine (FR)
(74) Representative: Cozens, Paul Dennis

(57) **Abstract**

A method of downloading data to a receiver/decoder comprises the steps, at the receiver/decoder, of:
receiving a bitstream including the data;
downloading a means for loading the data from the bitstream into the receiver/decoder; and
downloading said data from the bitstream using said loading means.

## Description

This invention relates to:-
- a method of downloading data to a receiver/decoder;
- such a receiver/decoder per se; and
- a transmission system.

The advent of digital transmission systems intended primarily for broadcasting television signals, in particular but not exclusively satellite television systems, has opened up the possibility of using such systems for other purposes. One of these is to provide interactivity with the end user.

One way of doing this is to run an application on the receiver/decoder through which the television signal is received. The code for the application could be permanently stored in the receiver/decoder. However, this would be rather limiting. Preferably, the receiver/decoder should be able to download the code for a required application. In this way, more variety may be provided, and applications can be updated as required without any action on the part of the user.

In an MPEG system, application code may be downloaded in MPEG tables transmitted in an MPEG bitstream. Therefore, software for downloading the MPEG tables must be stored permanently in the receiver/decoder. In order to download data such as application code or an updated version of a run time engine, complex software is required, this software typically taking up a large amount of memory. However, such software may only be used sporadically, if at all, and so a large amount of memory may be taken up by software which is redundant for a long period of time.

The present invention seeks to solve this and other problems.

In a first aspect, the present invention provides a method of downloading data to a receiver/decoder, comprising the steps, at the receiver/decoder, of:
receiving a bitstream including the data;
downloading a means for loading the data from the bitstream into the receiver/decoder; and
downloading said data from the bitstream using said loading means.

The term "receiver/decoder" used herein connotes a receiver for receiving either encoded or non-encoded signals, for example, television and/or radio signals. Embodiments of such receiver/decoders may include a decoder integral with the receiver for decoding the received signals, for example, in a "set-top box" or a such a decoder functioning in combination with a physically separate receiver.

By downloading the loading means for the data from the bitstream and storing it, preferably temporarily in RAM, of the receiver/decoder, the memory storage capacity of the receiver/decoder can effectively be increased for the time when the downloading of software is not required.

The bitstream may comprise at least one loading means, and, accordingly, the method may further comprise the steps, at a transmitting system, of:
for the or each loading means, dividing the loading means into a plurality of modules; and
for the or each loading means, dividing the data into a respective plurality of modules, each plurality of data modules being associated with a respective plurality of loading means modules.

Data, such as an application, may conveniently be made up of a number of modules, which can be downloaded, and if appropriate run, as required.

The method may further comprise the steps, at the transmitting system, of:
for the or each loading means, formatting each of the modules as a respective MPEG table, the tables having the same respective table identification ("TID") and respective different table identification extensions ("TID-extensions"); and
for the or each plurality of modules of data, formatting each of the modules of data as a respective MPEG table, the tables having the same respective TID as the tables of the loading means modules associated therewith and respective different TID-extensions.

It is preferred that an MPEG protocol is used and, if so, the downloading steps may comprise downloading module MPEG tables having the same TID.

The tables may have respective different TID-extensions other than a predetermined TID-extension; and the method may further comprise the step, at the transmitting system, of generating a respective directory MPEG table for the or each plurality of modules having the same TID, the or each directory table having said predetermined TID-extension and that TID, the directory table containing for each of the modules a name of that module and the respective TID-extension.

The method may further comprise the steps, at the receiver/decoder, of:
downloading one of the MPEG tables having the predetermined TID-extension so as to download a directory MPEG table;
determining from the content of the directory MPEG table the TID-extensions of the module MPEG tables having the same TID as the directory MPEG table; and
in said downloading steps, downloading the module MPEG tables having the same TID as that of the downloaded directory MPEG table and TID-extensions determined from the downloaded directory MPEG table.

By these features, the directory table can be readily identified because it has a particular TID-extension, and once it has been downloaded it can enable the receiver/decoder to identify the module tables of the loading means from their respective TID-extensions.

The method may further comprise the step, at a transmitting system, of generating a directory MPEG table having a predetermined table identification ("TID") and containing, for each of a plurality of version identifications of a receiver/decoder, a respective TID associated with that version identification.

If so, the method may further comprise the steps, at the receiver/decoder, of:
downloading said directory MPEG table having the predetermined TID; and
determining the version identification of the MPEG receiver/decoder;
   wherein the step of downloading a directory MPEG table comprises downloading that one of the MPEG tables having a TID associated with the version number of the receiver/decoder and the predetermined TID-extension.

It is expected that the receiver/decoder may be designed and manufactured by various different manufacturers. It may therefore have various different hardware designs, though they will of course all conform to the same functional specification. It is therefore important that data, such as an application, behaves in the same way on every receiver/decoder, and that a receiver/decoder should execute all applications in the same, correct manner. In order to ensure that the data is compatible with a particular version of a receiver/ decoder, the MPEG bitstream may include a loading means and data for each version of the receiver/decoder, and the directory table having the predetermined TID can enable the TID of the modules of the loading means and data for each version of the receiver/decoder to be easily identified.

Preferably, the method further comprises the steps, at the transmitting system, of:
including in each transmitted directory MPEG table a version identification therefor; and
   at the receiver/decoder:-
determining whether the version identification of a currently transmitted directory MPEG table is more recent than the version identification of a previously downloaded directory MPEG table having the same TID as the currently transmitted directory MPEG table, and if not, aborting the downloading of data.

In order to avoid overwriting resident data stored in the receiver/decoder with identical received data, an application requesting updating of the resident data can choose to abort the downloading of data if a table directory is the same as that used in a previous updating of resident data.

Preferably, at least one of the module MPEG tables is formatted as a plurality of MPEG sections which are transmitted separately in the MPEG bitstream, each of the MPEG sections containing in a predetermined portion thereof an identification of that MPEG section in the MPEG table and an indication of the number of the sections in a MPEG table.

The method may further comprise the step, at the transmitting system, of cyclically transmitting the MPEG tables in an MPEG bitstream.

The method may further comprise the step, in a transmitting system, of:
including in the bitstream a version identification of the data; and, at the receiver/decoder, the step of:
determining whether the version identification of the received data is more recent than the version identification of currently stored data, and if so, performing said step of downloading said data from the bitstream.

By this feature, the downloading can be aborted prior to erasing the resident software and/or commencing the downloading of the received data if the version identification of the received data is the same as that of resident data stored in the receiver/decoder.

Preferably, the step of determining whether the version identification of the received data is more recent than the version identification of currently stored data is conducted after determining that the version identification of a currently transmitted directory MPEG table is more recent than the version identification of a previously downloaded directory MPEG table having the same TID as the currently transmitted directory MPEG table.

Preferably, the method further comprises the steps, at a transmitting system, of;
transmitting a second loading means included in data included in said bitstream; and
   at the receiver/decoder, of:
downloading said second loading means; and
downloading said first-mentioned loading means using said second loading means.

This feature enables the loading means to be superseded at any time by downloading a second loading means from the MPEG bitstream.

In a second aspect, the present invention provides a receiver/decoder comprising:
a receiver for receiving a bitstream including data;
storage means; and
downloading means for downloading from the bitstream into the storage means a means for loading the data from the bitstream into the receiver/decoder.

Preferably, said downloading means is arranged to download a second loading means included in data included in said bitstream for downloading said first-mentioned loading means.

The receiver/decoder may be arranged to download MPEG tables. If so, the downloading means may be arranged to download an MPEG table having a table identification ("TID") and a predetermined table identification extension ("TID-extension") so as to download a directory MPEG table, to determine from the content of the directory MPEG table the TID-extensions of module MPEG tables having the same TID as the directory MPEG table, and to download the module MPEG tables having the same TID as that of the downloaded directory MPEG table and TID-extensions determined from the downloaded directory MPEG table so as to download said loading means.

The downloading means may be arranged to download a directory MPEG table having a predetermined TID and containing, for each of a plurality of version identifications of a receiver/decoder, a respective TID associated with that version identification, to determine the version identification of the MPEG receiver/decoder, and to download a directory MPEG table having a TID associated with the version number of the MPEG receiver/decoder and the predetermined TID-extension.

In a preferred embodiment, the downloading means is arranged to determine whether a version identification of a currently transmitted directory MPEG table is more recent than the version identification of a previously downloaded directory MPEG table having the same TID as the currently transmitted directory MPEG table, and if not, to abort the downloading of said loading means.

The receiver/decoder may further comprise a parallel port and/or a serial port arranged to receive data formatted as at least one MPEG table.

In a third aspect, the present invention provides a transmission system comprising:
means for transmitting a bitstream including at least one means for loading data into a receiver/decoder and data associated with the or each loading means; and
means for dividing the or each loading means into a plurality of modules and dividing the data associated with the or each loading means into a respective plurality of modules for transmittal by said transmitting means.

Preferably, the transmission system further comprises:
means for formatting each of the modules of the or each loading means as a respective MPEG table, the tables of the or each loading means having the same respective table identification ("TID") and respective different table identification extensions ("TID-extensions"); and
means for formatting each of the modules of the data associated with the or each loading means as a respective MPEG table, the tables of the modules of data having the same respective TID as the tables of the loading means modules associated therewith and respective different TID-extensions.

The tables may have respective different TID-extensions other than a predetermined TID-extension, and the system may further comprise means for generating a respective directory MPEG tables for the or each plurality of modules having the same TID, each directory table having that TID and said predetermined TID-extension, the directory containing for each of the modules a name of that module and the respective TID-extension.

The transmission system may further comprise:
means for generating a directory MPEG table having a predetermined table identification ("TID") and containing, for each of a plurality of version identifications of a receiver/decoder, a respective TID associated with that version identification.

The transmission system may further comprise means for including in each transmitted MPEG table a version identification therefor.

A fourth aspect of the present invention provides a combination of a receiver/decoder as described above and a transmission system as described above.

A fifth aspect of the present invention provides a signal including at least one means for loading data into a receiver/decoder and data associated with the or each loading means, the or each loading means being divided into a plurality of modules and the data associated with the or each loading means being divided into a respective plurality of modules.

All the features of the method aspect of the invention can be applied to the apparatus and signal aspects as appropriate, and vice versa.

Preferred features of the present invention will now be described, purely by way of example, with reference to the accompanying drawings, in which:-
- Figure 1: shows the overall architecture of a digital television system;
- Figure 2: shows the architecture of an interactive system of the digital television system of figure 1;
- Figure 3: is a schematic diagram of interfaces of a receiver/decoder forming part of the system of figures 1 and 2;
- Figure 4: is a schematic diagram of a remote controller used in the digital television system;
- Figure 5: shows the arrangement of files within a module downloaded into the memory of an interactive receiver/decoder;
- Figure 6: illustrates an interrelationship between a number of components of an MPEG stream;
- Figure 7: illustrates how an application may be made up of modules/tables, which in turn may be made up of sections;
- Figure 8: illustrates the authentication of an MPEG table;
- Figure 9: illustrates various areas of memory in a receiver/decoder of the television system;
- Figure 10: illustrates a parameters field;
- Figure 11: illustrates a hardware directory table;
- Figure 12: illustrates a loader directory table; and
- Figure 13: illustrates the procedure for downloading data.

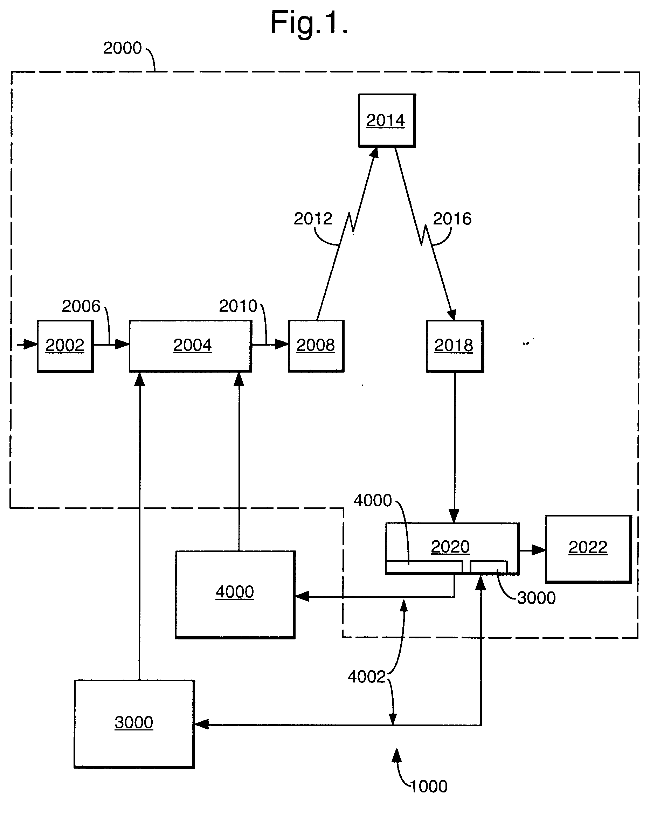

An overview of a digital television system 1000 according to the present invention is shown in figure 1. The invention includes a mostly conventional digital television system 2000 which uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecommunications links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2020. Using the decoder 2020 and smartcard, the end user may purchase commercial offers in either a subscription mode or a pay-per-view mode.

An interactive system 4000, also connected to the multiplexer 2004 and the receiver/decoder 2020 and again located partly in the broadcast centre and partly in the decoder, enables the end user to interact with various applications via a modemmed back channel 4002.

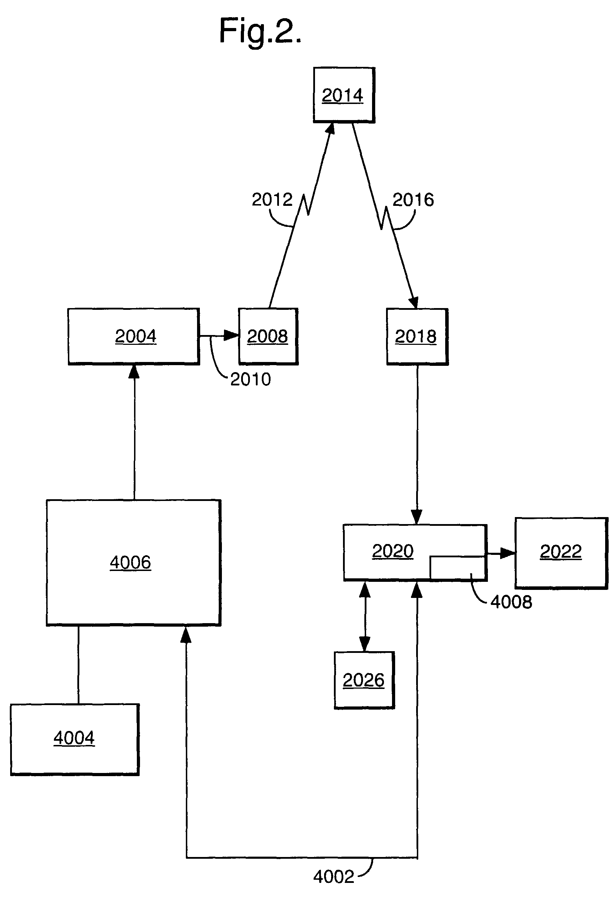

Figure 2 shows the general architecture of the interactive television system 4000 of the digital television system 1000 of the present invention.

For example, the interacting system 4000 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 2004 for insertion into the MPEG-2 transport stream (typically the private section thereof) to be broadcast to the end user;
- a virtual machine intending a run time engine (RTE) 4008, which is an executable code installed in the receiver/decoder 2020 owned or rented by the end user for enabling an end user to receive, authenticate, decompress, and load applications into the working memory of the decoder 2020 for execution. The engine 4008 also runs resident, general-purpose applications. The engine 4008 is independent of the hardware and operating system; and
- a modemmed back channel 4002 between the receiver/decoder 2020 and the application and data server 4006 to enable signals instructing the server 4006 to insert data and applications into the MPEG-2 transport stream at the request of the end user.

The interactive television system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 2020 from the MPEG-2 transport stream.

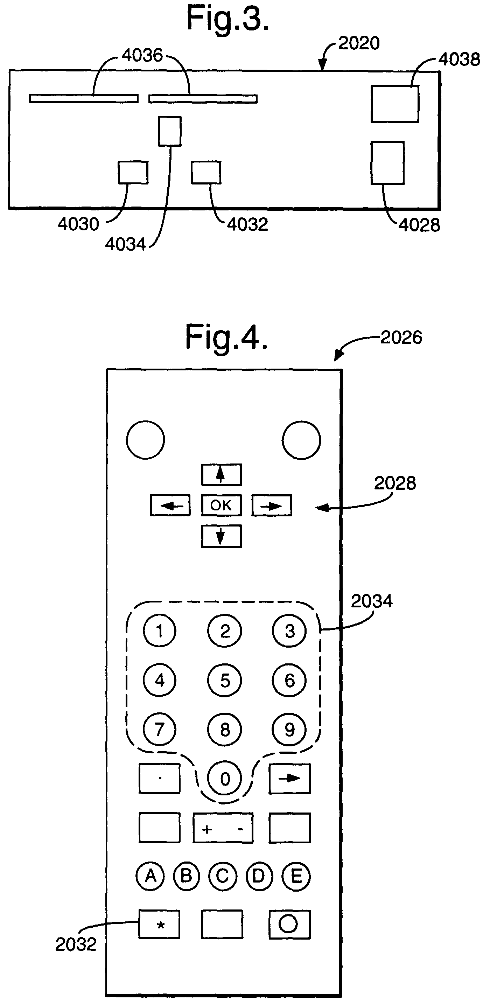

Physical interfaces of the receiver/decoder 2020 are used for downloading data. With reference to Figure 3, the decoder 2020 contains, for example, six downloading devices; MPEG flow tuner 4028, serial interface 4030, parallel interface 4032, modem 4034 and two card readers 4036. The receiver/decoder 2020 may also include a display 4038.

For the purposes of this specification, an application is a piece of computer code for controlling high level functions of preferably the receiver/decoder 2020. For example, when the end user positions the focus of a remote controller 2026 (as shown in more detail in figure 4) on a button object seen on the screen of the television set 2022 and presses the validation key, the instruction sequence associated with the button is run.

An interactive application proposes menus and executes commands at the request of the end user and provides data related to the purpose of the application. Applications may be either resident applications, that is, stored in the ROM (or FLASH or other non- volatile memory) of the receiver/decoder 2020, or broadcast and downloaded into the RAM (or FLASH) of the decoder 2020.

Examples of applications are:-
- An Initiating Application. The receiver/decoder 2020 is equipped with a resident initiating application which is an adaptable collection of modules (this term being defined in more detail hereunder) enabling the receiver/decoder 2020 to be immediately operative in the MPEG-2 environment. The application provides core features which can be modified by the broadcast supplier if required. It also provides an interface between resident applications and downloaded applications.
- A Startup Application. The startup application allows any application, either downloaded or resident, to run on the receiver/decoder 2020. This application acts as a bootstrap executed on arrival of a service in order to start the application. Startup is downloaded into RAM and therefore can be updated easily. It can be configured so that the interactive applications available on each channel can be selected and run, either immediately after downloading or after preloading. In the case of preloading, the application is loaded into the memory 2024 and is activated by the startup when required.
- A Program Guide. The Program Guide is an interactive application which gives full information about programming. For example, it may give information about, say, one week's television programmes provided on each channel of a digital television bouquet. By depressing a key on the remote controller 2026, the end user accesses an add-on screen, overlaid on the event shown on the screen of the television set 2022. This add-on screen is a browser giving information on the current and next events of each channel of the digital TV bouquet. By depressing another key on the remote controller 2026, the end user accesses an application which displays a list of information on events over one week. The end user can also search and sort events with simple and customised criteria. The end user can also access directly a selected channel.
- A Pay Per View application. The Pay Per View Application is an interactive service available on each PPV channel of the digital TV bouquet in conjunction with the conditional access system 3000. The end user can access the application using a TV guide or channel browser. Additionally, the application starts automatically as soon as a PPV event is detected on the PPV channel. The end user is then able to buy the current event either through his daughter smartcard 3020 or via the communication server 3022 (using a modem, a telephone and DTMF codes, MINITEL or the like). The application may be either resident in the ROM of the receiver/decoder 2020 or downloadable into the RAM of the receiver/decoder 2020.
- An Internet Browser application. In one example of the Internet browser application, instructions from the user, such as a request to view a web page having a particular URL, are entered using the remote controller 2026, and these are sent by the modemmed back channel 4002 to the application and data server 4006. The appropriate web page is then included in the transmissions from the broadcast centre, received by the receiver/decoder 2020 via the uplink 2012, transponder 2014 and downlink 2016, and displayed on the television 2022.

Applications are stored in memory locations in the receiver/decoder 2020 and represented as resource files. The resource files comprise graphic object description unit files, variables block unit files, instruction sequence files, application files and data files.

The graphic object description unit files describe the screens, the man-machine interface of the application. The variables block unit files describe the data structures handled by the application. The instruction sequence files describe the processing operations of the applications. The application files provide the entry points for the applications.

The applications constituted in this way can use data files, such as icon library files, image files, character font files, colour table files and ASCII text files. An interactive application can also obtain on-line data by effecting inputs and/or outputs.

The engine 4008 only loads into its memory those resource files it needs at a given time. These resource files are read from the graphic object description unit files, instruction sequence files and application files; variables block unit files are stored in memory following a call to a procedure for loading modules and remain locked there until a specific call to a procedure for unloading modules is made.

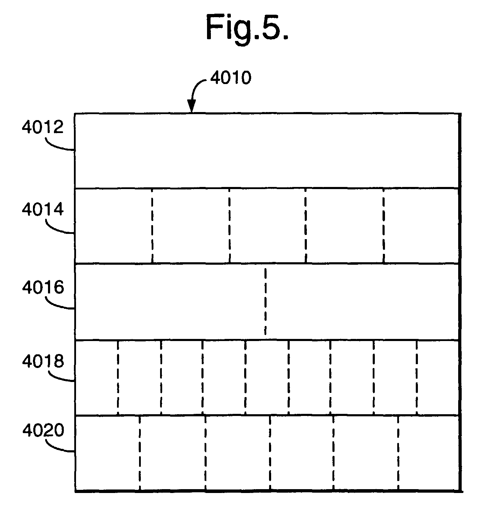

With reference to Figure 5, a module 4010, such as a tele-shopping module, is a set of resource files and data comprising the following:
a single application file 4012;
an undetermined number of graphic object description unit files 4014;
an undetermined number of variables block unit files 4016;
an undetermined number of instruction sequence files 4018; and
   where appropriate, data files 4020 such as icon library files, image files, character font files, colour table files and ASCII text files.

The concept of modules 4010 together with the concept of downloading small pieces of code allows the easy evolution of applications. They can be downloaded into permanent FLASH memory of the decoder 2020 as resident software or broadcast in order to be downloaded into the RAM of the decoder 2020 only when needed by the end user.

In the case of MPEG flow, one module 4010 is transported in one single MPEG table. In the case of modules transmitted to the MPEG tuner 4028, the long MPEG-2 format is used, with a long header and a CRC code. This is also the case with the five other interfaces (serial interface 4030, parallel interface 4032, modem 4034 and two card readers 4036), except that the "short" MPEG-2 format with a shorter header and no CRC is used.

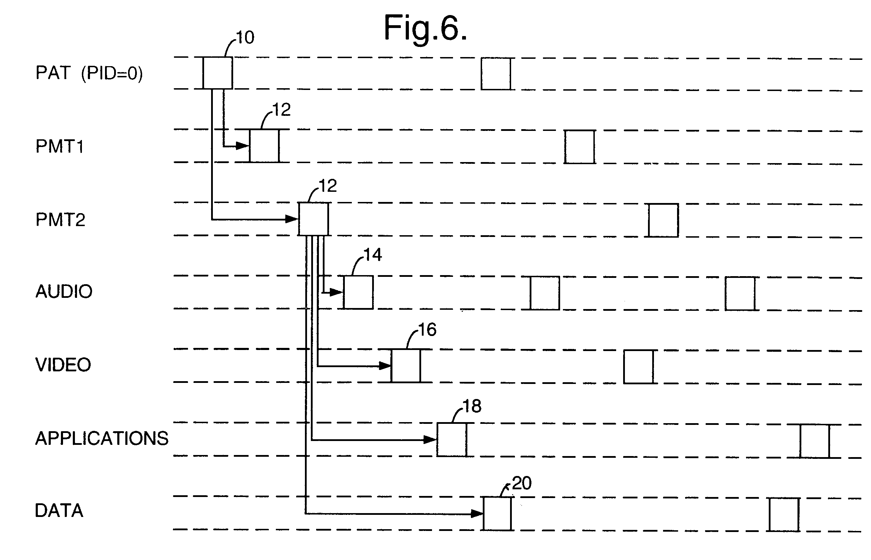

Referring in particular to figure 6, as is known, the MPEG-2 bitstream includes a programme access table ("PAT") 10 having a packet identification ("PID") of 0. The PAT contains references to the PIDs of the programme map tables ("PMTs") 12 of a number of programmes. Each PMT contains a reference to the PIDs of the streams of the audio MPEG tables 14 and video MPEG tables 16 for that programme. A packet having a PID of zero, that is the programme access table 10, provides the entry point for all MPEG access.

In order to download applications and data for them, two new stream types are defined, and the relevant PMT also contains references to the PIDs of the streams of application MPEG tables 18 (or sections of them) and data MPEG tables 20 (or sections of them).

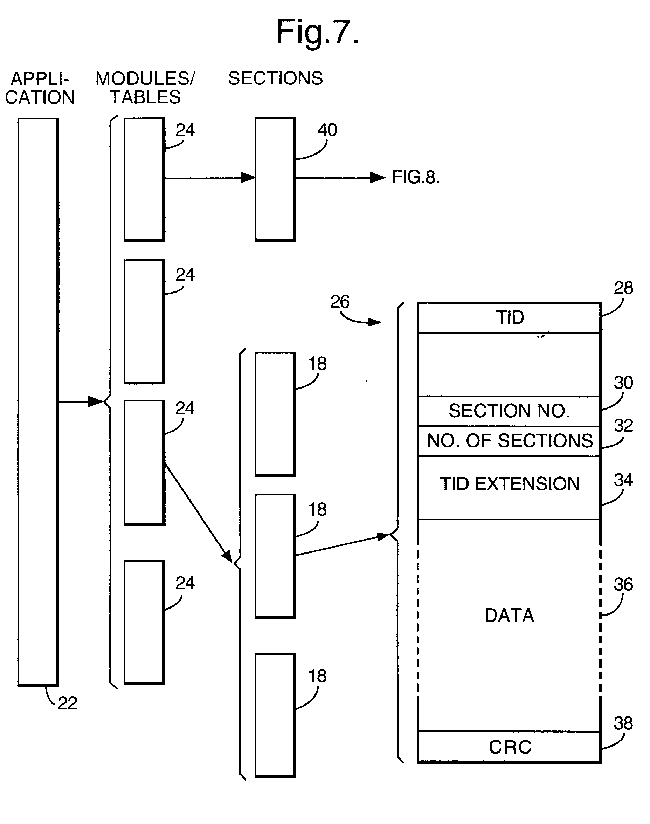

Referring to figure 7, in order to download an application 22, the application is divided into modules 24 each formed by an MPEG table, some of which are made up by a single section 18, and others of which may be made up by a plurality of sections 18. A typical section 18 has a header 26, which includes a one-byte table identification ("TID") 28, the section number 30 of that section in the table, the total number 32 of sections in that table and a two-byte TID extension 34. Each section also includes a data part 36 and a CRC 38. For a particular module/table 24, all of the sections 18 making up that table 24 have the same TID 28 and the same TID extension 34. For a particular application 22, all of the tables 24 making up that application 22 have the same TID 28, but different respective TID extensions.

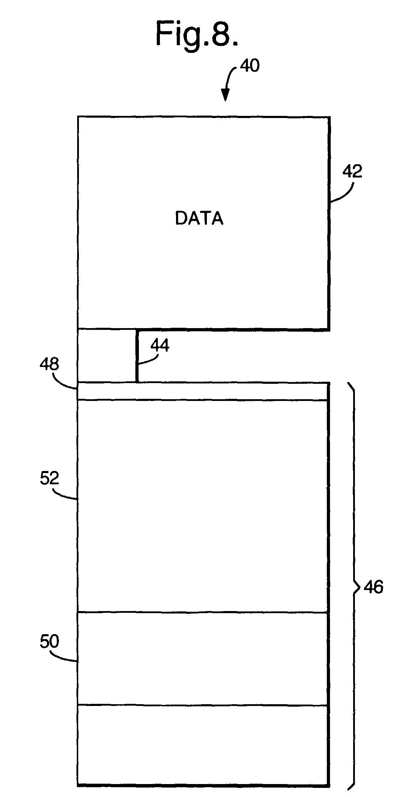

The authentication of an MPEG table will now be described with reference to Figure 8. The table 40 includes data 42 (typically comprising header 26, TID 28, TID extension 34 and data part 36), a key identification 44 and a cipher area 46. The key identification 44 comprises a 1-byte identification of a particular private key to be used to encrypt the block. The cipher area 46 comprises a block of 96 bytes of data. The first byte 48 is zero. A 16 byte signature 50 begins at an offset of typically between 0 and 31 bytes after the first byte. The signature 50 is produced using the known MD5 signature generating process on the data 42. Dummy data 52 is inserted between the first byte and the signature 50 and the block is encrypted using a known encryption process and the private key to which the key identification 44 corresponds.

If a plurality of MPEG tables are to be authenticated, then a directory listing the names of the tables and the signatures of those tables is included in the carrier signal. In the case of MPEG flow, this directory is transported in one single MPEG table, typically having a TID extension 34 of zero. The directory table is authenticated with the mechanism described above. Once the directory has been downloaded from the carrier signal it is possible for the application to download one or more of the MPEG tables listed in the directory.

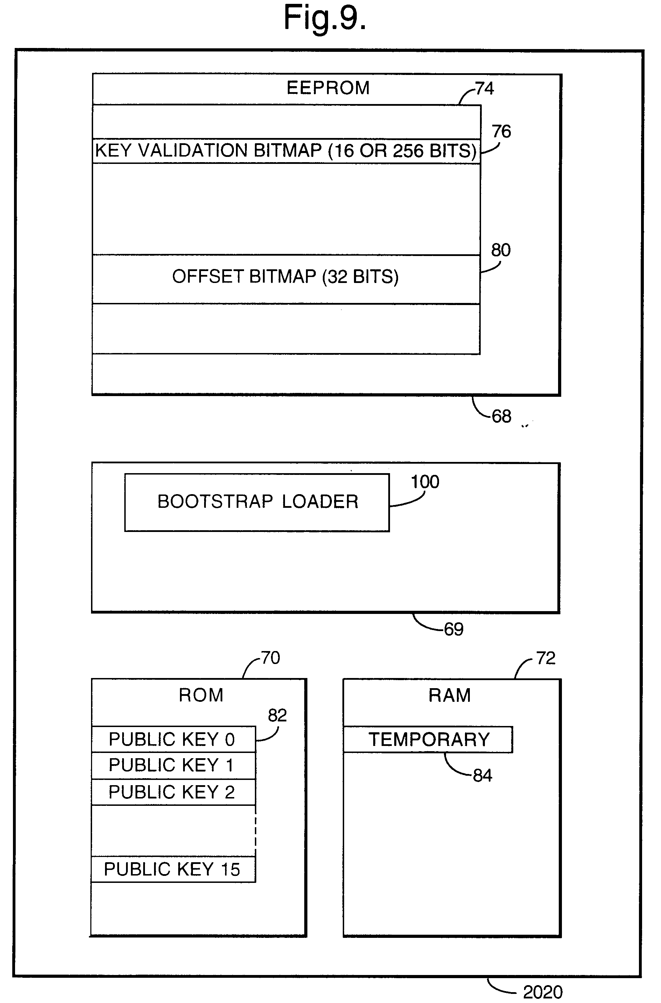

The operation of the receiver/decoder 2020 in dealing with signatures and decryption during downloading of an application will now be described. Referring to figure 9, the receiver/decoder 2020 includes EEPROM 68, FLASH 69, ROM 70 and RAM 72. The EEPROM 68 includes a protected region 74 which is used by the virtual machine, and where only the virtual machine (and not a normal application) can write. The protected region 74 includes a key validation bitmap 76 of 16 or 256 bits, and an offset bitmap 80 of 32 bits. The ROM 70 includes, in one embodiment, sixteen public keys 82, in which case a 16-bit key validation bitmap is employed, and in another embodiment 256 public keys, in which case a 256-bit key validation bitmap is employed. The public keys are identified by their physical locations in the ROM 70, or they may alternatively be included in a Iookup table, whereby a particular key identification will yield the corresponding public key. The RAM 72 may be used to store a temporary key 84.

When an application is to be downloaded, firstly the directory table having the predetermined TID for that application and a TID extension of zero is downloaded. The key identification 44 is then extracted from the directory table and a check is made of the key validation bitmap 76 in the protected memory 74 that the bit corresponding to the extracted key identification 44 is set. If it is not, then further downloading of the application is aborted. However, if the appropriate key is set, then a public key 82 is selected from the ROM 70 corresponding to the extracted key identification 44. The selected public key and a known decryption process are then used to decrypt the encrypted block 46 in the directory table 40 to produce a decrypted block. The offset contained in the offset bitmap 80 in the protected memory 74 is looked up, or, if more than one offset bit is set, each offset bit is looked up in turn, and sixteen bytes of data are extracted from the decrypted block starting with the looked-up offset. For the or each looked-up offset, the 16 bytes are treated as the signature transmitted with the directory table 40. The signature of the entries in the directory 42 of the directory table 40 is calculated using the known MD5 process, and this calculated signature is compared with the signature extracted from the decrypted block. If the two signatures for the or each looked-up offset do not match, then further downloading of the application is aborted. However, if one of the signatures matches, then downloading of the modules specified in the directory 42 can proceed. As mentioned above, in order to download a particular module, the TID extension for that module is obtained from the directory 42, and the MPEG table 24 or sections 18 with the same TID as the directory table and with the obtained TID extension is downloaded. Once the module MPEG table has been downloaded, the receiver/decoder 2020 calculates the signature of the downloaded table using the known MD5 process and then compares that calculated signature with the signature contained in the directory entry. If the signatures match, then the module is accepted, but if they do not match, then the module is rejected.

All of the modules of the application can thus be downloaded in the manner specified above, and the application can be run by the receiver/decoder 2020.

The downloading of data into the receiver/decoder 2020 will now be described in more detail with reference to Figures 9 to 13.

The receiver/decoder 2020 includes loader 100, referred to as a "Bootstrap" loader 100, which is used primarily to download a loader for downloading software, such as manufacturer firmware, the run time engine 4008 and applications, present in the MPEG datastream for storage in the FLASH memory 69 of the receiver/decoder 2020. The Bootstrap loader 100 is stored in the FLASH memory 69 of the receiver/decoder 2020 and is not erasable therefrom. The Bootstrap loader 100 functions under the control of the hardware of the receiver/decoder 2020 and software stored therein.

Writing/updating of software stored in the receiver/decoder may be performed:
- at the request of an application stored in the receiver/decoder 2020; or
- if the software previously stored in the receiver/decoder 2020 (referred to as "resident" software) has become corrupted.

To determine whether resident software has become corrupted, software written by the manufacturer of the receiver/decoder 2020 and stored therein calculates a checksum on the resident software data and compares this to a checksum written in the resident software. If the two values of the checksum are not equal, the resident software has become corrupted.

The FLASH memory 69 and EEPROM 68 of the receiver/decoder 2020 contain parameters which enable the Bootstrap loader 100 to download a loader from the bitstream. Parameters may be stored in the Bootstrap loader 100 itself, that is, in FLASH memory 69, or in EEPROM 68. Examples of parameters which may be stored in the FLASH memory 69 include:
- the frequency to which the transponder 2014 is tuned;
- various characteristics of the signal to be demodulated by the receiver/decoder 2020;
- the PID upon which software is to be transmitted;
- a set of public keys (preferably three keys) to be used during authentication;
- a time-out for the loading of directory tables from the MPEG bitstream;
- the version number of the Bootstrap loader 100; and
- an N byte "checksum" parameter used to check the integrity of resident software, the value of which is determined by the manufacturer of the receiver/decoder 2020.

Examples of parameters stored in the EEPROM 68, and which may be updated by an application stored in the receiver/decoder 2020, include:
- further characteristics of the signal to be demodulated by the receiver/decoder 2020; and
- parameters which enable a report on a writing/updating to be compiled.

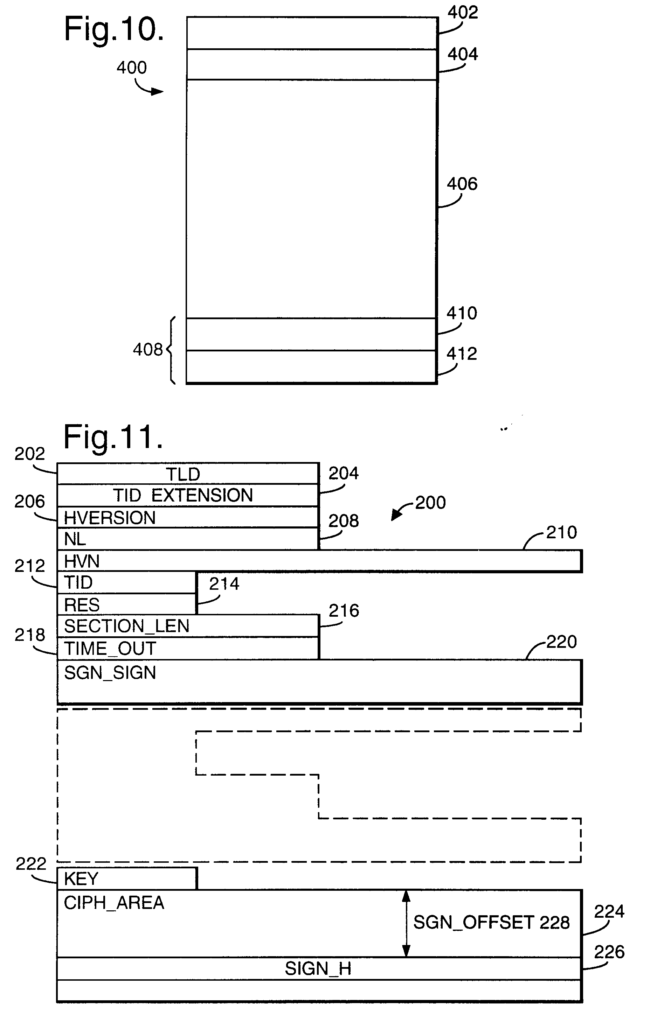

These parameters are stored in respective parameter fields in the FLASH memory 69 or EEPROM 68. With reference to Figure 10, each parameter field 400 includes a length 402, a reserved byte 404, a set of parameters 406 and a Longitudinal Redundancy Code (LRC) checksum 408. The checksum comprises CRL 410, which is an exclusive-OR of the preceding bytes of the parameter field 400, and NCRL 412, which is the 1's complement of the CRL 410. If an application stored in the receiver/decoder 2020 wishes to update the parameters stored in a parameter field, for example, to update a PID, it calculates an LRC checksum for the field and compares that with the LRC checksum 410 stored in the field. If the two values match, then updating of the parameter field is enabled; if not, the updating of the parameter field is aborted.

The MPEG bitstream including the data to be downloaded into the receiver/decoder 2020 includes an additional loader, referred to as an "Instream" loader. The Bootstrap loader 100 downloads the Instream loader from the MPEG bitstream into RAM 72 of the receiver/decoder 2020, and it is this Instream loader which downloads the data from the MPEG bitstream, for example, in order to update the resident software.

The software downloaded into the FLASH memory 69 of the receiver/decoder 2020 may also contain a loader, referred to as a "Resident" loader. This loader should at least be able to perform a writing/update of software from the MPEG bitstream, and may offer other features, such as updates from local ports, and may allow the video and audio data in the MPEG bitstream to be decoded. The Resident loader is loaded from the bitstream at the request of an application, for example, to update the loader which performs the downloading of the Instream loader. Therefore, if writing/updating is requested by an application stored in the receiver/decoder 2020 and the resident software is not corrupted, the Resident loader is used to perform the update instead of the Bootstrap loader 100.

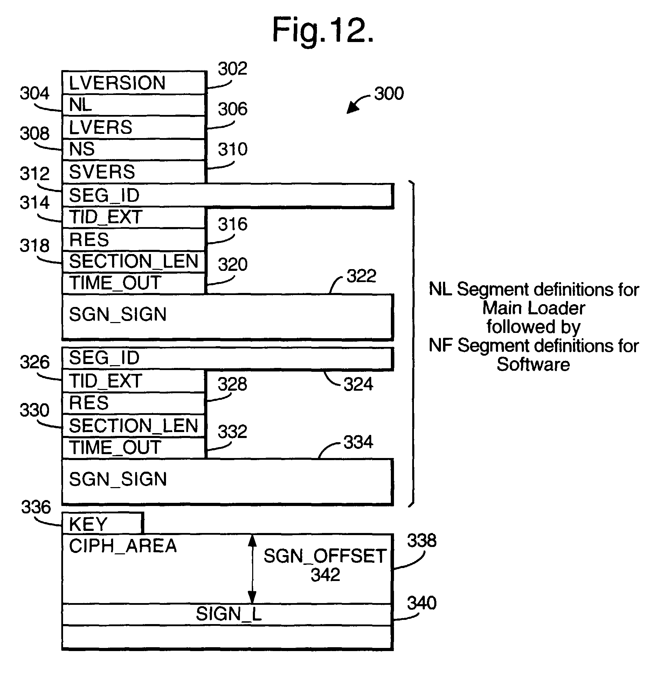

The various MPEG tables included in the MPEG bitstream which allow a receiver/decoder 2020 to locate and download the required software will now be described with reference to Figures 11 and 12.

The MPEG bitstream includes at least one hardware directory table 200 and a plurality of loader directories 300.

A hardware directory table 200 enables the Bootstrap loader 100 to locate the correct versions of the Instream loader and the software to be downloaded for a number of different versions of the receiver/decoder 2020. With reference to Figure 11, a hardware directory table 200 includes a TID 202 of D0 and a TID extension 204 of 0000, which values are previously stored in the EEPROM 68 of the receiver/decoder 2020 to enable, for example, the Bootstrap loader 100 to locate and download the hardware directory table 200.

The hardware directory table 200 includes:
a version number, HVERSION 206, of the hardware directory 200. The version number is increased each time there is a change in the content of the hardware directory 200;
the number, NL 208, of Instream loader descriptions contained in the hardware directory 200;
for each version of the receiver/decoder 2020:
   an identifier, HVN 210, of a version number of such a receiver/decoder 2020;
   the TID 212 of the MPEG tables used for the loader directory 300 associated with that HVN 210, the Instream loader and the software to be downloaded;
   a redundant byte, RES 214;
   a maximum size, SECTION_LEN 216, of a section of the MPEG table used for the loader directory 300 associated with that HVN 210;
   a value, TIME_OUT 218, of the time-out for the loading of the loader directory 300 associated with the HVN 210; and
   the value, SGN_SIGN 220, of the signature of the loader directory associate with the HVN 210;
an identification, KEY 222, of the private key used for the authentication of the hardware directory 200; and
a ciphered area, CIPH_AREA 224, containing the signature SIGN_H 226 of the hardware directory 200, the signature being offset from the beginning of the CIPH_AREA 224 by a signature offset SGN_OFFSET 228.

Having downloaded the hardware directory table 200, the Bootstrap loader 100 searches the table 200 for an entry corresponding with the HVN 210 of the receiver/decoder 2020. If a match does not occur, the downloading is aborted. If a match occurs, the Bootstrap loader 100 identifies from the table 200 the TID 212 that has been assigned to the loader directory 300 associated with the HVN 210 of the receiver/decoder 2020, the Instream loader and the software to be downloaded.

With reference to Figure 12, each loader directory 300 associated with the HVN 210 of the receiver/decoder 2020 includes:
a version number, LVERSION 302, of the loader directory 300. The version number is increased each time there is a change in the content of the loader directory 300;
the number, NL 304, of MPEG tables of the Instream loader;
the version number, LVERS 306, of the Instream loader;
the number, NS 308, of MPEG tables of the software to be downloaded;
the version number, SVERS 310, of the software to be downloaded;
for each MPEG table of the Instream loader:
   the identification, SEG_ID 312 of that MPEG table;
   the TID extension, TID_EXT 314, of that MPEG table;
   two redundant bytes, RES 316;
   a maximum size, SECTION_LEN 318, of an MPEG section of that MPEG table;
   a value, TIME_OUT 320, of the time-out for the loading of that MPEG table; and
   the value, SGN_SIGN 322, of the signature of that MPEG table; for each MPEG table of the software:
   the identification, SEG_ID 324 of that MPEG table;
   the TID extension, TID_EXT 326, of that MPEG table;
   two redundant bytes, RES 328;
   a maximum size, SECTION_LEN 330, of an MPEG section of that MPEG table;
   a value, TIME_OUT 332, of the time-out for the loading of that MPEG table; and
   the value, SIGN_SIGN 334, of the signature of that MPEG table;
an identification, KEY 336, of the private key used for the authentication of the loader directory 300; and
a ciphered area, CIPH_AREA 338, containing the signature SIGN_L 340 of the loader directory 300, the signature being offset from the beginning of the CIPH_AREA 338 by a signature offset SGN_OFFSET 342.

During the updating a report is compiled, containing, inter alia, details on each step of the writing/updating process, e.g. whether the step was successfully completed or not, so that the step at which writing/updating may have failed may be later identified. For example, the report includes:
the HVERSION 206 of the hardware directory 200;
if an error has occurred during the processing of the hardware directory 200, an indication of the type of error and the TID extension of the MPEG table of the hardware directory 200 at which the error occurred;
the LVERSION 302 of the loader directory;
if an error has occurred during the processing of the loader directory 300, an indication of the type of error and the TID extension of the MPEG table of the loader directory 300 at which the error occurred; and
if an error has occurred during the processing of the Instream loader, an indication of the type of error and the TID extension of the MPEG table of the Instream loader at which the error occurred; and
if an error has occurred during the processing of the software, an indication of the type of error and the TID extension of the MPEG table of the software at which the error occurred.

The report also includes the reason as to why writing/updating was performed, e.g. at the request of an application, the number of software inconsistencies detected and the number of upgrade failures.

When updating resident software with software present in the MPEG bitstream at the request of an application, the receiver/decoder 2020 is arranged to compare the SVERS 310 of the software identified in the freshly downloaded loader directory table 300 with the version number of the resident software. If the SVERS 310 is later, then the modules associated with the resident software are erased from the FLASH memory 69 and the modules of the updated software are downloaded and mounted.

A front panel LED display 4038 of the receiver/decoder 2020 is adapted to display messages to the user of the receiver/decoder 2020 during the downloading of data. For example, the four following messages are specified in a parameter field stored in the FLASH memory 69 of the receiver/decoder 2020:
- a "LOAD" message, indicating that writing/updating is proceeding in a "normal" state, that is, at the request of an application;
- a "NATIV" message, indicating that updating is proceeding in a "native" state, that is, because the resident software has become corrupted;
- a "OOO" message, indicating that the Bootstrap loader 100 is unable to perform the writing/updating because it is unable to locate consistent or valid parameters (such as the frequency to which the MPEG tuner 4028 is to be set or the PID of the MPEG bitstream) in the memory of the receiver/decoder 2020; and
- an "ERRL" message, indicating that an error, other than those specified with reference to the OOO message, has occurred during writing/updating.

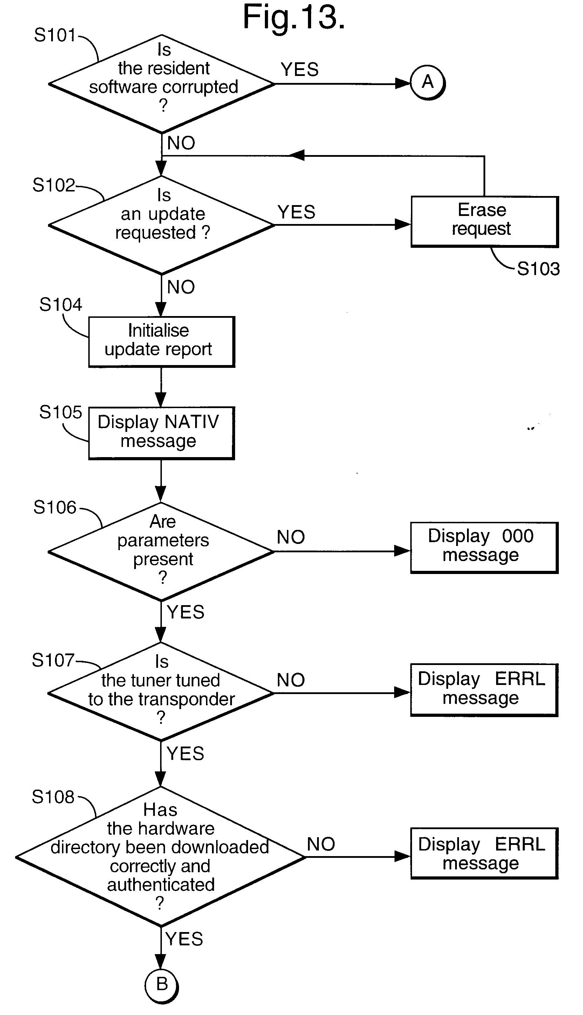

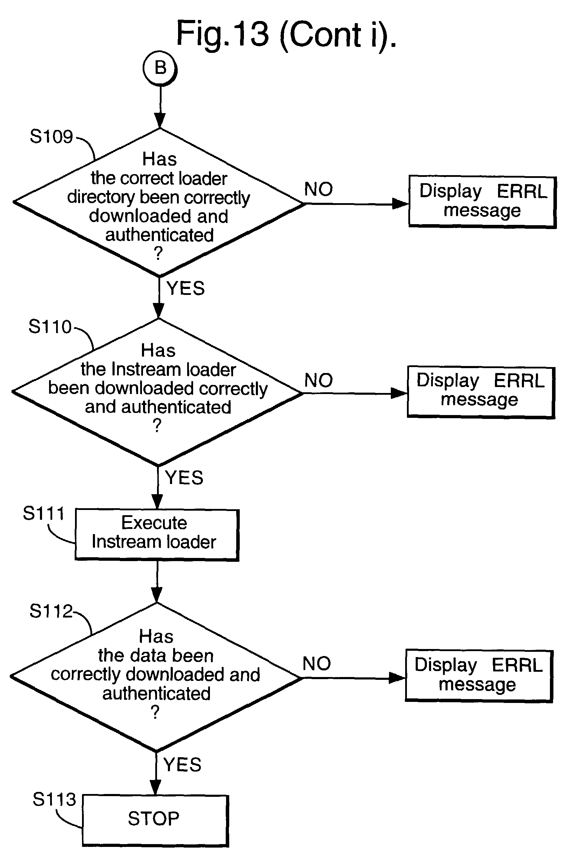

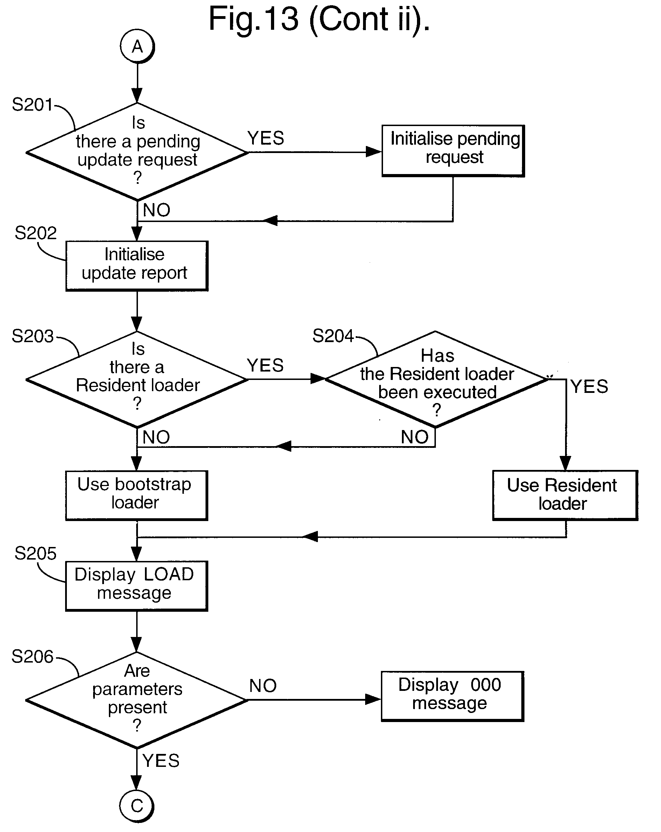

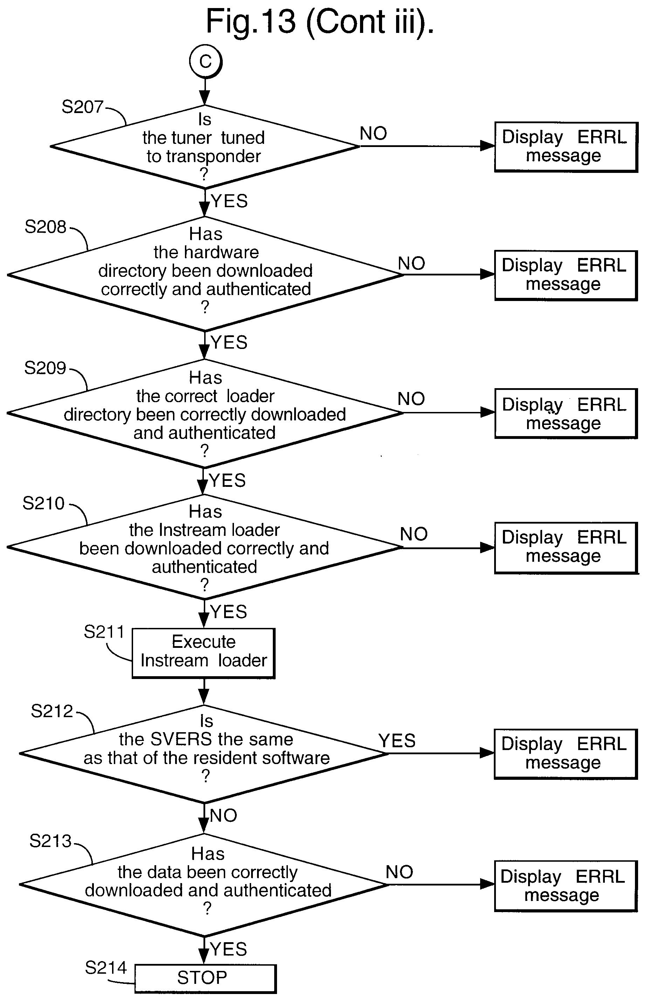

By way of summary, the steps in, for example, the updating of resident software will now be described with reference to Figure 13.

In step S101, software stored in the receiver/decoder checks the integrity of any resident software by performing the checksum calculation and comparing the result of that calculation with the value of the checksum stored in the resident software. If the two values are different, then updating continues in the native state; if the two values are the same, or if no resident software is located, then updating continues in the normal state.

In this native state, it is then determined whether a previous update request is still pending in step S102. If such an update request from an application is pending, that request is erased in step S103 and step S102 is repeated. If no such update request is still pending, the report of the previous updating is erased in step S104 and initialised in order to commence the logging of this updating. The report logs the reason for the updating request, i.e. to replace corrupted software.

Following step S104, the NATIV message is displayed on the display 4038 of the receiver/decoder 2020 in step S105.

In step S106, the parameters stored in the parameter fields of the EEPROM and FLASH memory 69 are checked. If the tuning parameters and/or the PID parameter are not defined, the display 4038 is caused to display the OOO message and the updating is aborted.

If these parameters are defined in the parameter field, the updating proceeds to step S107, in which the Bootstrap loader 100 tunes the MPEG tuner 4028 to the transponder 2014 in accordance with the parameters stored in the parameter fields. If the tuning fails, the updating is aborted and the ERRL message is displayed.

If the tuning is successful, the Bootstrap loader 100 downloads and authenticates the hardware directory 200 in step S108. If the hardware directory 200 is not downloaded before the time-out is reached, or if the hardware directory 200 is not authenticated (as an error has occurred during the downloading), the updating is aborted and the ERRL message displayed.

If downloading and authentication are successful, the Bootstrap loader 100 searches for an HVN 210 corresponding to the version number of the receiver/decoder 2020, as defined in a parameters field. If such an HVN is not located, the updating is aborted and the ERRL message displayed.

If such an entry is located, the Bootstrap loader 100 reads the TID 212 of the MPEG tables used for the loader directory 300 associated with that HVN 210, the Instream loader and the software to be downloaded and, in step S109, downloads and authenticates the correct loader directory 300. If the loader directory 300 is not downloaded before the time-out is reached, or if the loader directory is not authenticated (as an error has occurred during the downloading), the updating is aborted and the ERRL message displayed.

If downloading and authentication are successful, the Bootstrap loader 100 downloads the Instream loader from the MPEG bitstream into the RAM 72 of the receiver/decoder 2020 in step S110. If the Instream loader is not downloaded before the time-out is reached, or if the Instream loader is not authenticated (as an error has occurred during the downloading), the updating is aborted and the ERRL message displayed.

If the Instream loader is successfully loaded and authenticated, the Instream loader is executed in step S111 and, in step S112, the resident software is erased and the segments of the software to be downloaded are downloaded by the Instream loader, authenticated and written in the FLASH memory 69. If the software is not downloaded before the time-out is reached, or if the software is not authenticated (as an error has occurred during the downloading) or if an error occurs during the writing of the software into the FLASH memory 69, the updating is aborted and the ERRL message displayed.

If the resident software is successfully updated, the writing of the report is stopped in step S113 and the receiver/decoder 2020 reset to enable a further updating to be commenced.

In any steps at which the updating is aborted, the step may alternatively be reperformed a prescribed number of times until successfully completed or until a time-out for performing that step is reached.

If updating is to proceed in the normal state, the Bootstrap loader 100 determines in step S201 whether an update request from an application is already pending. If not, the updating continues as normal. If there is already a pending update request, then the pending request is processed first.

The report of the previous updating is erased in step S202 and initialised in order to commence the logging of this updating. The report logs the reason for the updating request, i.e. at the request of an application, and any updating options that are selected by the application.

It is then determined, in step S203, whether a Resident loader is stored in the FLASH memory 69 of the receiver/decoder 2020. If such a loader is stored in the receiver/decoder, it is determined in step S204 whether the Resident loader has been executed in response to a command from software stored in the receiver/decoder 2020. If the Resident loader has been executed, then the Resident loader performs subsequent steps in the updating process that would normally be carried out by the Bootstrap loader 100.

If the Resident loader is not present, or has not been executed, then the Bootstrap loader 100 is used. It is also possible for the software stored in the receiver/decoder 2020 to force the Bootstrap loader 100 to continue the updating process even if a Resident loader is stored in the FLASH memory 69.

The LOAD message is displayed on the display 4038 of the receiver/decoder 2020 in step S205.

In step S206, the parameters stored in the parameter fields of the EEPROM and FLASH memory 69 are checked. If the tuning parameters and/or the PID parameter are not defined, the display 4038 is caused to display the OOO message and the updating is aborted.

If these parameters are defined in the parameter field, the updating proceeds to step S207, in which the Bootstrap or Resident loader tunes the tuner 4028 to the transponder 2014 in accordance with the parameters stored in the parameter fields. If the tuning fails, the updating is aborted and the ERRL message is displayed.

If the tuning is successful, the Bootstrap or Resident loader downloads and authenticates the hardware directory 200 in step S208. If the hardware directory 200 is not downloaded before the time-out is reached, if the hardware directory is not authenticated (as an error has occurred during the downloading) or, depending on an option selected by the application requesting the updating, if a successful updating has been carried out using a hardware directory having the same HVERSION 206, the updating is aborted and the ERRL message displayed.

If downloading and authentication are successful and the updating is enabled by the application, the Bootstrap or Resident loader searches for an HVN 210 corresponding to the version number of the receiver/decoder 2020, as defined in a parameters field. If such an HVN is not located, the updating is aborted and the ERRL message displayed.

If such an entry is located, the Bootstrap or Resident loader reads the TID 212 of the MPEG tables used for the loader directory 300 associated with that HVN 210, the Instream loader and the software to be downloaded and, in step S209, downloads and authenticates the correct loader directory 300.

If the loader directory 300 is not downloaded before the time-out is reached, if the loader directory is not authenticated (as an error has occurred during the downloading), or, depending on an option selected by the application requesting the updating, if a successful updating has been carried out using a loader directory having the same LVERS 306, the updating is aborted and the ERRL message displayed.

If downloading and authentication are successful and the updating is enabled by the application, the Bootstrap loader 100 downloads the Instream loader from the MPEG bitstream into the RAM 72 of the receiver/decoder 2020 in step S210. If the Instream loader is not downloaded before the time-out is reached, or if the Instream loader is not authenticated (as an error has occurred during the downloading), the updating is aborted and the ERRL message displayed.

If the Instream loader is successfully loaded and authenticated, the Instream loader is executed in step S211 and, in step S212, the version number SVERS 310 of the software in the MPEG bitstream is compared to that of the resident software.

If the version numbers are the same, the writing of the software into the FLASH memory 69 is not performed and the application update request is erased. If the version numbers are different, the resident software is erased and the segments of the software to be downloaded are downloaded by the Instream loader, authenticated and written in the FLASH memory 69 in step S213.

If the software is not downloaded before the time-out is reached, or if the software is not authenticated (as an error has occurred during the downloading) or if an error occurs during the writing of the software into the FLASH memory 69, the updating is aborted and the ERRL message displayed.

If the resident software is successfully updated, the writing of the report is stopped in step S214, the pending update request is erased and the receiver/decoder 2020 reset to enable a further updating to be commenced.

As in the native state, in any steps at which the updating is aborted, the step may alternatively be reperformed until successfully completed.

It will be understood that the present invention has been described above purely by way of example, and modifications of detail can be made within the scope of the invention.

Each feature disclosed in the description, and (where appropriate) the claims and drawings may be provided independently or in any appropriate combination.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. A method of downloading data to a receiver/decoder, comprising the steps, at the receiver/decoder, of:
receiving a bitstream including the data;
downloading a means for loading the data from the bitstream into the receiver/decoder; and
downloading said data from the bitstream using said loading means.

2. A method according to Claim 1, wherein the bitstream includes at least one loading means, said method further comprising the steps, at a transmitting system, of:
for the or each loading means, dividing the loading means into a plurality of modules; and
for the or each loading means, dividing the data into a respective plurality of modules, each plurality of data modules being associated with a respective plurality of loading means modules.

3. A method according to Claim 2, further comprising the steps, at the transmitting system, of:
for the or each loading means, formatting each of the modules as a respective MPEG table, the tables having the same respective table identification ("TID") and respective different table identification extensions ("TID-extensions"); and
for the or each plurality of modules of data, formatting each of the modules of data as a respective MPEG table, the tables having the same respective TID as the tables of the loading means modules associated therewith and respective different TID-extensions.

4. A method according to Claim 3, comprising, in said downloading steps, of downloading module MPEG tables having the same TID.

5. A method according to Claim 3, wherein said tables have respective different TID-extensions other than a predetermined TID-extension; and further comprising the step, at the transmitting system, of generating a respective directory MPEG table for the or each plurality of modules having the same TID, the or each directory table having said predetermined TID-extension and that TID, the directory table containing for each of the modules a name of that module and the respective TID-extension.

6. A method according to Claim 5, further comprising the steps, at the receiver/decoder, of:
downloading one of the MPEG tables having the predetermined TID-extension so as to download a directory MPEG table;
determining from the content of the directory MPEG table the TID-extensions of the module MPEG tables having the same TID as the directory MPEG table; and
in said downloading steps, downloading the module MPEG tables having the same TID as that of the downloaded directory MPEG table and TID-extensions determined from the downloaded directory MPEG table.

7. A method according to any preceding claim, further comprising the step, at a transmitting system, of generating a directory MPEG table having a predetermined table identification ("TID") and containing, for each of a plurality of version identifications of a receiver/decoder, a respective TID associated with that version identification.

8. A method as claimed in Claim 7 when dependent upon Claim 6, further comprising the steps, at the receiver/decoder, of:
downloading said directory MPEG table having the predetermined TID; and
determining the version identification of the MPEG receiver/decoder;
wherein the step of downloading a directory MPEG table comprises downloading that one of the MPEG tables having a TID associated with the version number of the receiver/decoder and the predetermined TID-extension.

9. A method according to any of Claims 5 to 8, further comprising the steps, at the transmitting system, of:
including in each transmitted directory MPEG table a version identification therefor; and
at the receiver/decoder:-
determining whether the version identification of a currently transmitted directory MPEG table is more recent than the version identification of a previously downloaded directory MPEG table having the same TID as said currently transmitted directory MPEG table, and if not, aborting the downloading of data.

10. A method according to any preceding claim, further comprising the step, in a transmitting system, of:
including in the bitstream a version identification of the data; and, at the receiver/decoder;
determining whether the version identification of the received data is more recent than the version identification of currently stored data, and if so, performing said step of downloading said data from the bitstream.

11. A method as claimed in any preceding claim, further comprising the steps, at a transmitting system, of;
transmitting a second loading means included in data included in said bitstream; and
at the receiver/decoder, of:
downloading said second loading means; and
downloading said first-mentioned loading means using said second loading means.

12. A receiver/decoder comprising:
a receiver for receiving a bitstream including data;
storage means; and
downloading means for downloading from the bitstream into the storage means a means for loading the data from the bitstream into the receiver/decoder.

13. A receiver/decoder according to Claim 12, wherein said downloading means is arranged to download a second loading means included in data included in said bitstream for downloading said first-mentioned loading means.

14. A receiver/decoder according to Claim 12 or 13, arranged to download MPEG tables.

15. A receiver/decoder according to Claim 14, wherein said downloading means is arranged to download an MPEG table having a table identification ("TID") and a predetermined table identification extension ("TID-extension") so as to download a directory MPEG table, to determine from the content of the directory MPEG table the TID-extensions of module MPEG tables having the same TID as the directory MPEG table, and to download the module MPEG tables having the same TID as that of the downloaded directory MPEG table and TID-extensions determined from the downloaded directory MPEG table so as to download said loading means.

16. A receiver/decoder according to Claim 14 or 15, wherein said downloading means is arranged to download a directory MPEG table having a predetermined TID and containing, for each of a plurality of version identifications of a receiver/decoder, a respective TID associated with that version identification, to determine the version identification of the MPEG receiver/decoder, and to download a directory MPEG table having a TID associated with the version number of the MPEG receiver/decoder and the predetermined TID-extension.

17. A receiver/decoder according to Claim 15 or 16, wherein said downloading means is arranged to determine whether a version identification of a currently transmitted directory MPEG table is more recent than the version identification of a previously downloaded directory MPEG table having the same TID as the currently transmitted directory MPEG table, and if not, to abort the downloading of said loading means.

18. A transmission system comprising:
means for transmitting a bitstream including at least one means for loading data into a receiver/decoder and data associated with the or each loading means; and
means for dividing the or each loading means into a plurality of modules and dividing the data associated with the or each loading means into a respective plurality of modules for transmittal by said transmitting means.

19. A transmission system according to Claim 18, further comprising:
means for formatting each of the modules of the or each loading means as a respective MPEG table, the tables of the or each loading means having the same respective table identification ("TID") and respective different table identification extensions ("TID-extensions"); and
means for formatting each of the modules of the data associated with the or each loading means as a respective MPEG table, the tables of the modules of data having the same respective TID as the tables of the loading means modules associated therewith and respective different TID-extensions.

20. A transmission system according to Claim 19, wherein said tables have respective different TID-extensions other than a predetermined TID-extension; said system further comprising means for generating a respective directory MPEG tables for the or each plurality of modules having the same TID, each directory table having that TID and said predetermined TID-extension, the directory containing for each of the modules a name of that module and the respective TID-extension.

21. A transmission system according to any of Claims 18 to 20, further comprising:
means for generating a directory MPEG table having a predetermined table identification ("TID") and containing, for each of a plurality of version identifications of a receiver/decoder, a respective TID associated with that version identification.

22. A transmission system according to any of Claims 19 to 21, further comprising means for including in each transmitted MPEG table a version identification therefor.

23. A combination of a receiver/decoder according to any of Claims 12 to 17 and a transmission system according to any of Claims 18 to 22.

24. A signal including at least one means for loading data into a receiver/decoder and data associated with the or each loading means, the or each loading means being divided into a plurality of modules and the data associated with the or each loading means being divided into a respective plurality of modules.
